# EUROPEAN PATENT APPLICATION

(11) **EP 4 682 658 A1**
(43) Date of publication of application: **21.01.2026**
(21) Application number: 24770381.2
(22) Date of filing: 16.02.2024
(51) Int. Cl.: G05B 23/02, G05B 19/418

(54) **INFORMATION PROCESSING DEVICE, INFORMATION PROCESSING METHOD, PROGRAM, AND PRODUCTION SYSTEM**

(30) Priority: 13.03.2023 JP 2023038532
(71) Applicant: OMRON Corporation, Kyoto 600-8530 (JP)
(72) Inventor: NAKAI, Takaki, Kyoto-shi, Kyoto 600-8530 (JP); YASUKAWA, Kazuki, Muko-shi, Kyoto 617-0002 (JP); YAMAMOTO, Hiroshi, Yamaga-shi, Kumamoto 861-0596 (JP)
(74) Representative: Mewburn Ellis LLP
(86) International application number: PCT/JP2024/005528
(87) International publication number: WO 2024/190266

(57) **Abstract**

An information processing device (100) that processes information relating to a status of a production line (2) including a plurality of processes calculates a statistic for each unit time by performing multivariate analysis on a plurality of variables indicating statuses of the plurality of processes. The information processing device (100) generates an image signal indicating an image including a state monitoring screen (201), the state monitoring screen being a screen on which a first graph (201A) and a chart (201B) are displayed next to each other along the same time axis, the first graph indicating a time series of the statistics with a first axis representing time and a second axis representing the statistics, the chart indicating an execution period of a task category to which a task relating to at least one of the plurality of processes belongs. The information processing device (100) outputs the image signal to a terminal device (70), which is a display device.

## Description

### TECHNICAL FIELD

The present disclosure relates to an information processing device, an information processing method, a program, and a production system.

### BACKGROUND ART

Japanese Patent Laying-Open No. 2017-177218 (PTL 1) discloses that a multivariate statistical control process and a control chart are used to control variations of process parameters in a manufacturing process.

### CITATION LIST

### PATENT LITERATURE

PTL 1: Japanese Patent Laying-Open No. 2017-177218

### NON PATENT LITERATURE

NPL 1: Kishio TAMURA, "3rd State Diagnosis Using MT Method", Standardization and Quality Control, 2008, Vol. 61, No. 12

### SUMMARY OF INVENTION

### TECHNICAL PROBLEM

The above-described control chart plots a change of a parameter in a specific process over time. When the parameter deviates from a control range, it is determined that an abnormality has occurred in the process. It is not easy for a user to identify a cause of the abnormality based only on the variation of the parameter. Therefore, it may take time for the user to start a task for returning the process to a normal state.

An object of the present disclosure is to provide an information processing device, an information processing method and a program for providing information that makes it easier for a user to identify a cause of an abnormality occurring in a production process.

### SOLUTION TO PROBLEM

According to one example of the present disclosure, an information processing device that processes information relating to a status of a production line including a plurality of processes includes: a storage unit configured to store a plurality of variables indicating statuses of the plurality of processes and store a task record, the task record including a task category to which a task relating to at least one of the plurality of processes belongs, and an execution period that is a time period during which the task is executed; a processing unit; and an output unit. The processing unit is configured to: calculate a statistic for each unit time by performing multivariate analysis on the plurality of variables; and generate an image signal indicating an image including a state monitoring screen, the state monitoring screen being a screen on which a first graph and a chart are displayed next to each other along the same time axis, the first graph indicating a time series of the statistics with a first axis representing time and a second axis representing the statistics, the chart indicating the execution period of the task category. The output unit is configured to output the image signal to a display device.

According to the present disclosure, information that makes it easier for a user to identify a cause of an abnormality occurring in a production process can be provided. When an abnormality occurs, a statistic varies greatly. Information about the great variation of the statistic and a start time of the variation is provided to the user by the first graph. Furthermore, the chart presents information about a task executed at (or immediately before) the start time of the great variation of the statistic to the user. Therefore, it becomes easier for the user to identify the cause of the abnormality occurring in the production process.

In the disclosure above, the processing unit is further configured to calculate a degree of contribution of each of the plurality of variables to a statistic selected from the time series of the statistics, and generate the image signal including a degree-of-contribution display screen in the image, the degree-of-contribution display screen being a screen on which a second graph indicating the degree of contribution for each of the plurality of variables is displayed.

According to the present disclosure, information about a variable that greatly affects (contributes to) the statistic, of the plurality of variables, can be provided to the user. Therefore, information about a variable that greatly contributes to the statistic when the abnormality occurs in the production line can, for example, be provided to the user.

In the disclosure above, the processing unit is configured to: select a main item from the plurality of variables based on the degree of contribution; and generate the image signal such that a degree of contribution of the main item in the second graph and the execution period of the task category relating to the main item in the chart on the state monitoring screen are displayed on the image in association with each other.

According to the present disclosure, when the statistic deviates from a control range due to the occurrence of the abnormality in the production line, the user can grasp to which task category a variable that greatly contributes to the statistic deviating from the control range is related.

In the disclosure above, the processing unit is configured to set, to the same color, a display color of the degree of contribution of the main item in the second graph and a display color of the execution period of the task category relating to the main item in the chart on the state monitoring screen.

According to the present disclosure, the user can easily grasp the relevance between the variable (main item) that greatly contributes to the statistic deviating from the control range and the task category relating to the main item.

In the disclosure above, the task record further includes information about a task content of the task. The processing unit is configured to generate the image signal such that the task content associated with the task category and the execution period selected from the task record is displayed on the image in association with the chart on the state monitoring screen.

According to the present disclosure, information about the specific task content belonging to the task category relating to the main item can be provided to the user.

According to one example of the present disclosure, an information processing method of processing information relating to a status of a production line including a plurality of processes includes: calculating a statistic for each unit time by performing multivariate analysis on a plurality of variables indicating statuses of the plurality of processes; generating an image signal indicating an image including a state monitoring screen, the state monitoring screen being a screen on which a graph and a chart are displayed next to each other along the same time axis, the graph indicating a time series of the statistics with a first axis representing time and a second axis representing the statistics, the chart indicating an execution period of a task category to which a task relating to at least one of the plurality of processes belongs; and outputting the image signal to a display device.

According to the present disclosure, information that makes it easier for a user to identify a cause of an abnormality occurring in a production process can be provided.

According to one example of the present disclosure, a program causes a computer to perform an information processing method of processing information relating to a status of a production line including a plurality of processes. The information processing method includes: calculating a statistic for each unit time by performing multivariate analysis on a plurality of variables indicating statuses of the plurality of processes; generating an image signal indicating an image including a state monitoring screen, the state monitoring screen being a screen on which a graph and a chart are displayed next to each other along the same time axis, the graph indicating a time series of the statistics with a first axis representing time and a second axis representing the statistics, the chart indicating an execution period of a task category to which a task relating to at least one of the plurality of processes belongs; and outputting the image signal to a display device.

According to the present disclosure, information that makes it easier for a user to identify a cause of an abnormality occurring in a production process can be provided.

According to one example of the present disclosure, a production system includes: a production line including a plurality of processes; and an information processing device that processes information relating to statuses of the plurality of processes. The information processing device is configured to: acquire a plurality of variables indicating the statuses of the plurality of processes, and a task record, the task record including a task category to which a task relating to at least one of the plurality of processes belongs, and an execution period that is a time period during which the task is executed; calculate a statistic for each unit time by performing multivariate analysis on the plurality of variables; and generate an image signal indicating an image including a state monitoring screen, the state monitoring screen being a screen on which a graph and a chart are displayed next to each other along the same time axis, the graph indicating a time series of the statistics with a first axis representing time and a second axis representing the statistics, the chart indicating the execution period of the task category. The production system further includes a display device configured to display the state monitoring screen upon receipt of the image signal.

According to the present disclosure, it becomes easier for a user to identify a cause of an abnormality occurring in a production process. Therefore, a probability that the time required for identifying the cause of the abnormality can be shortened is increased, for example. Even if the production line goes down due to the abnormality, the downtime can be shortened.

### ADVANTAGEOUS EFFECTS OF INVENTION

According to the present disclosure, information that makes it easier for a user to identify a cause of an abnormality occurring in a production process can be provided.

### BRIEF DESCRIPTION OF DRAWINGS

Fig. 1 is a schematic diagram showing a configuration of a production system including an information processing device according to an embodiment.
Fig. 2 is a schematic diagram showing an exemplary configuration of a management system according to the embodiment.
Fig. 3 is a schematic diagram showing an example of a hardware configuration of the information processing device according to the embodiment.
Fig. 4 shows an example of a functional configuration of the information processing device according to the embodiment.
Fig. 5 shows an example of a configuration of a main portion of a mechanical relay, which is an example of a product produced in a production line.
Fig. 6 shows an example of an input screen of a task record provided to a user by a terminal device.
Fig. 7 is a schematic diagram for illustrating association between information included in the task record and an item serving as a candidate for a cause of an abnormality by the information processing device.
Fig. 8 is a schematic diagram showing an example of a state monitoring screen.
Fig. 9 is a schematic diagram showing an example of a degree-of-contribution display screen according to the embodiment.
Fig. 10 is a schematic diagram showing an example of an additional display on the state monitoring screen provided to the terminal device by the information processing device according to the embodiment.
Fig. 11 is a flowchart showing an example of a flow of a process performed by the information processing device according to the embodiment.

### DESCRIPTION OF EMBODIMENTS

An embodiment of the present invention will be described in detail with reference to the drawings. In the drawings, the same or corresponding portions are denoted by the same reference characters and description thereof will not be repeated.

### § 1. Exemplary Application

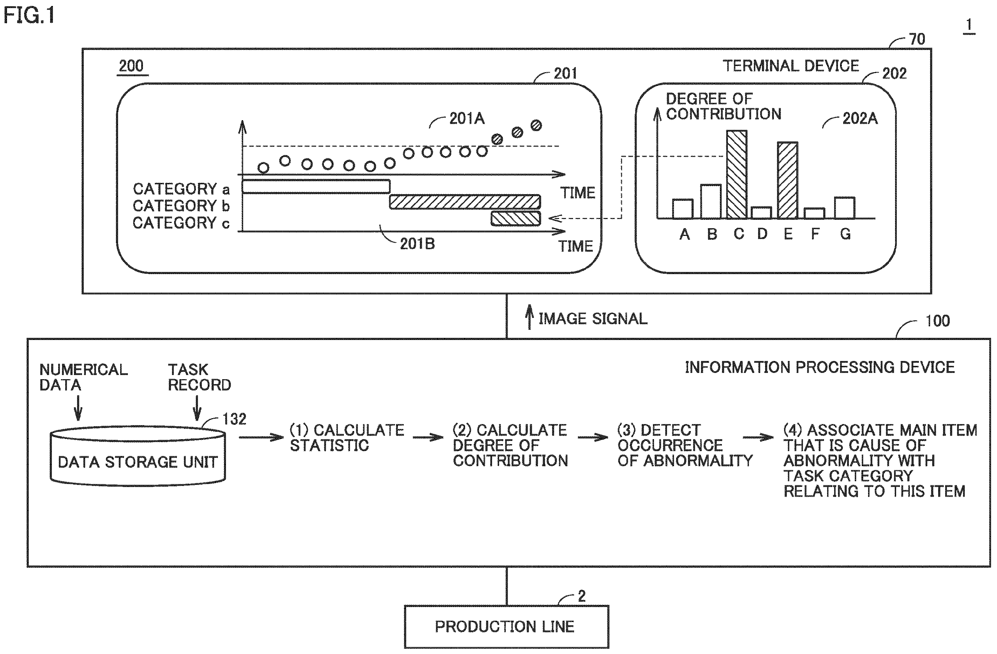

An example of a scene in which the present invention is applied will be described with reference to Fig. 1. Fig. 1 is a schematic diagram showing a configuration of a production system including an information processing device according to an embodiment. As shown in Fig. 1, a production system 1 includes a production line 2, an information processing device 100 that processes information relating to a status of production line 2, and a terminal device 70. Information processing device 100 is communicably connected to production line 2 and communicably connected to terminal device 70.

Information processing device 100 repeatedly acquires, from production line 2, values of a plurality of variables indicating the status of production line 2. "Values of a plurality of variables" refer to numerical data output from a sensor (not shown) or a facility (not shown).

The timing at which information processing device 100 repeatedly acquires the values of the plurality of variables is not particularly limited. For example, information processing device 100 may acquire the values of the plurality of variables in constant cycles.

Information processing device 100 further acquires a task record. The task record may be input to information processing device 100 in the form of text data. For example, the task record is input from terminal device 70 to information processing device 100. The task record is created, for example, by a user of production line 2. However, the task record is not limited to the task record created by the user. For example, the task record may be created by identifying a task based on information from a camera or a device placed in an area and recording the identified task.

The task record corresponds to qualitative information about the status of production line 2. The task record includes information about a task relating to at least one of a plurality of processes in production line 2. Specifically, the task record includes information about a task category to which the above-described task belongs, an execution period of the task, and the contents of the task.

Information processing device 100 stores the acquired numerical data and task record in a data storage unit 132. Information processing device 100 calculates a statistic for each unit time by reading the plurality of variables (numerical data) from data storage unit 132 and performing multivariate analysis on the plurality of variables (step (1)).

Next, based on the calculated statistic, information processing device 100 creates a graph (first graph) indicating a time series of the statistics with a first axis representing time and a second axis representing the statistics. Furthermore, based on the task record stored in data storage unit 132, information processing device 100 creates a chart indicating the execution period of the task category. Although the form of the chart is not particularly limited, the chart may be, for example, a Gantt chart. Information processing device 100 generates an image signal indicating an image including a state monitoring screen on which the first graph and the chart are displayed next to each other along the same time axis. Information processing device 100 outputs the image signal to terminal device 70.

Terminal device 70 is a device having a display function, an input function, a communication function and the like, and is implemented by, for example, a personal computer, a tablet or the like. Terminal device 70 receives the image signal and displays an image 200.

Image 200 includes a state monitoring screen 201 on which a result of monitoring of a state of production line 2 is displayed. On state monitoring screen 201, a graph 201A (first graph) and a chart 201B are displayed next to each other along the same time axis.

Furthermore, information processing device 100 calculates a degree of contribution of each of the plurality of variables to a statistic selected from the time series. "Statistic selected from the time series" refers to, for example, a statistic selected by the user from the time series of the statistics shown in graph 201A. In this case, information processing device 100 generates the image signal including, in the above-described image, a degree-of-contribution display screen on which a second graph indicating a degree of contribution for each of the plurality of variables is displayed. Terminal device 70 displays a degree-of-contribution display screen 202 (second screen) indicating the degree of contribution of each of the plurality of variables to the selected statistic, together with state monitoring screen 201. A graph 202A (second graph) indicating the degree of contribution of each of the plurality of variables is included in degree-of-contribution display screen 202 (step (2)).

Furthermore, information processing device 100 compares the calculated statistic with a control range of the statistic. When the calculated statistic is outside the control range, information processing device 100 detects the occurrence of an abnormality in production line 2 (step (3)). In this case, in the display of the statistics in graph 201A, information processing device 100 sets a color of a marker indicating the statistic deviating from the control range to a color (e.g., red) different from a color (e.g., blue) of a marker indicating a statistic that is within the control range. By confirming that the marker different in color from the normal color is being displayed in graph 201A on state monitoring screen 201, the user can easily grasp the occurrence of the abnormality in production line 2. Regarding the display of graph 201A, a warning range may be further set within the control range and a statistic that is within the warning range may be indicated with a yellow marker.

When the user selects the statistic deviating from the control range, information processing device 100 selects a main item that is a main cause of the occurrence of the abnormality from the plurality of variables, based on the degree of contribution of each of the plurality of variables to this statistic. The selection of the main item is based on the magnitude of the degree of contribution. For example, of the plurality of variables, a variable having a highest degree of contribution and a variable having a second highest degree of contribution are selected as the main items.

Information processing device 100 generates an image signal such that the main item for the cause of the abnormality in production line 2 and a task category relating to this item are displayed in association with each other (step (4)). Specifically, when generating the image signal indicating the image including state monitoring screen 201 and degree-of-contribution display screen 202, information processing device 100 generates the image signal such that the degree of contribution of the main item in graph 202A and the execution period of the task category relating to the main item in chart 201B on state monitoring screen 201 are displayed in association with each other.

In the example of graph 202A shown in Fig. 1, the plurality of variables are denoted as parameters A to G. Of parameters A to G, parameter C is a parameter having a highest degree of contribution and parameter E is a parameter having a second highest degree of contribution. When generating the image signal, information processing device 100 sets a display color of the degree of contribution of parameter C and a display color of the degree of contribution of parameter E to red and yellow, respectively. In graph 202A, the degree of contribution of parameter C is displayed in red and the degree of contribution of parameter E is displayed in yellow. The degrees of contribution of the other parameters (third highest degree of contribution and below) may, for example, be displayed in color (e.g., green) different from the display colors of the highest degree of contribution and the second highest degree of contribution.

Three task categories (categories a to c) and execution periods of these task categories are displayed in chart 201B. Of categories a to c, a task category relating to parameter C is task category c and a task category relating to the degree of contribution of parameter E is task category b. In chart 201B, a bar indicating the execution period of task category c is displayed in the same color (i.e., red) as the display color of the degree of contribution of parameter C in graph 202A. Furthermore, in chart 201B, a bar indicating the execution period of task category b is displayed in the same color (i.e., yellow) as the display color of the degree of contribution of parameter E in graph 202A.

Information processing device 100 processes the information obtained through the production process, so as to make it easier for the user to identify the cause of the abnormality that has occurred in the production process. By looking at state monitoring screen 201 and degree-of-contribution display screen 202, the user can grasp the task category relating to the abnormality when the abnormality occurs in the production line. As a result, the user can more easily guess the cause of the abnormality. Therefore, the present embodiment makes it easier to achieve the effect of shortening the time required for identifying the cause of the abnormality, for example. The present embodiment also makes it easier to achieve the effect of shortening the downtime when the production line goes down due to the abnormality.

In the present embodiment, the case in which the main item having the high degree of contribution to the statistic and the task category relating to this item are displayed in association with each other is not limited to only the case in which the statistic deviates from the control range. For example, when the warning range is set within the control range of the statistic as described above, a main item determined based on the magnitude of a degree of contribution to a statistic that is within the warning range and a task category relating to this item may be displayed in association with each other. When an abnormal tendency is seen from transition of the statistic even if the statistic is within the control range, a task linked to the degree of contribution or the variable having the high degree of contribution can be identified.

### § 2. Specific Example

### <Exemplary Configuration of System>

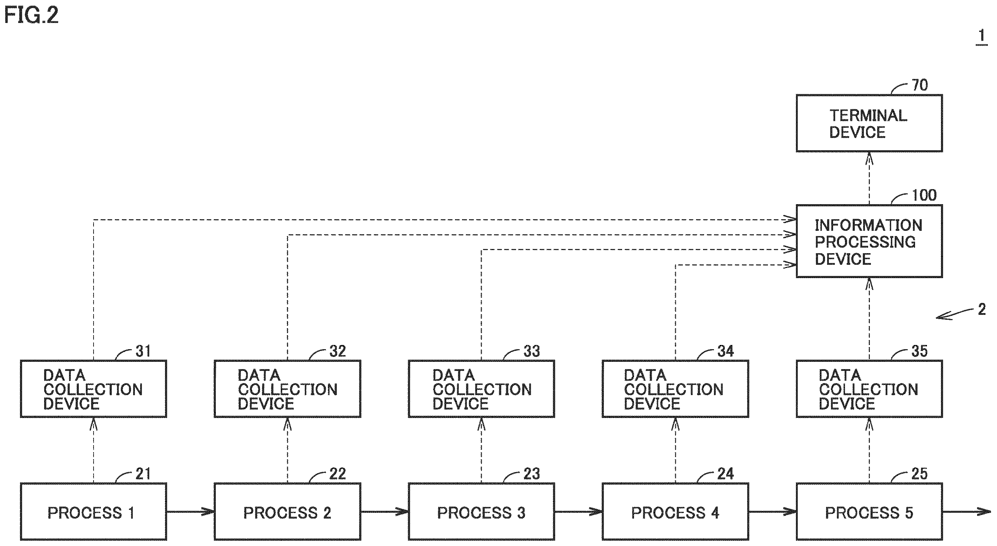

Fig. 2 is a schematic diagram showing an exemplary configuration of a management system according to the embodiment. Referring to Fig. 2, production system 1 is associated with production line 2 including a plurality of processes and provides a function for managing production line 2.

In the present embodiment, production line 2 is not limited to a line for production of a specific product. The present embodiment is applicable to any production line including a plurality of processes. Furthermore, the number of processes included in production line 2 is not particularly limited. As an example, in Fig. 2, production line 2 includes a plurality of processes 21 to 25. In Fig. 2, processes 21 to 25 are also denoted as "process 1" to "process 5".

Data collection devices 31 to 35 collect data about statuses of processes 21 to 25, respectively. Data collection devices 31 to 35 transmit the collected data to information processing device 100. Each of data collection devices 31 to 35 is, for example, a sensor, a device or a facility. Each of data collection devices 31 to 35 may transmit state information about a corresponding process through, for example, a not-shown network at every predetermined period or at every event.

Information processing device 100 collects, from each of data collection devices 31 to 35, information about a status of a corresponding process. Using the collected information, information processing device 100 manages the status of production line 2. Furthermore, information processing device 100 generates an image signal indicating an image including a screen for displaying the status of production line 2. Information processing device 100 outputs the image signal to terminal device 70.

Terminal device 70 functions as a display device that displays a result of analysis by information processing device 100. Furthermore, terminal device 70 also functions as an input device through which the user inputs a record about the task in the production line.

Production system 1 according to the embodiment adopts the 4M+1E management. The 4M+1E management refers to a method of performing factor analysis from the viewpoints of 4M, i.e., Machine, Man, Material, and Method, and 1E, i.e., Environment. Analyzing causes of phenomena (problems) occurring in quality control, setting remedies and measures for the phenomena (problems), and the like are considered from these viewpoints.

Factors that are inherently caused by, for example, a manufacturing facility, a device, an instrument and the like are classified into the viewpoint of Machine.

Factors such as, for example, years of experience and proficiency of an operator, mental and physical conditions of an operator, and contents of a task handled by an operator are classified into the viewpoint of Man.

Factors that are caused by, for example, characteristics, quality, properties and the like of a raw material are classified into the viewpoint of Material.

Factors that are caused by, for example, a procedure defined for each process and the like are classified into the viewpoint of Method.

Factors that are caused by, for example, lighting, sound, air and the like are classified into the viewpoint of Environment.

A factor relating to some phenomenon occurring in quality control is not necessarily a single factor, and a plurality of factors belonging to the same viewpoint or belonging to different viewpoints may cause the phenomenon in relation to each other. When such a plurality of factors cause the phenomenon in relation to each other, the plurality of factors may also be collectively referred to as "combined factors".

One object of production system 1 according to the embodiment is to facilitate quality control of a manufacturing facility from the perspective of the 4M+1E management. According to the present embodiment, even a user having no knowledge about the 4M+1E management (e.g., a person involved in quality control or a person in charge of quality control) can perform quality control of a manufacturing facility more efficiently and more appropriately.

### <Hardware Configuration of Information Processing Device>

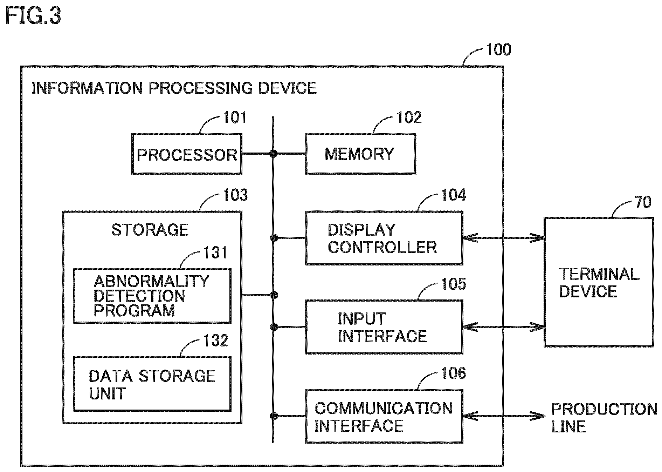

Fig. 3 is a schematic diagram showing an example of a hardware configuration of the information processing device according to the embodiment. As shown in Fig. 3, information processing device 100 typically has a structure conforming to a general-purpose computer architecture. Specifically, information processing device 100 includes a processor 101 such as a central processing unit (CPU) or a micro-processing unit (MPU), a memory 102, a storage 103, a display controller 104, an input interface 105, and a communication interface 106. These components are interconnected via a bus to be able to communicate data with one another.

Processor 101 implements various kinds of processes according to the present embodiment by loading various kinds of programs stored in storage 103 into memory 102 and executing the programs.

Memory 102 is typically a volatile storage device such as a DRAM and stores a program read from storage 103, and the like.

Storage 103 is typically a non-volatile magnetic storage device such as a hard disk drive. Storage 103 stores an abnormality detection program 131 executed by processor 101. Therefore, the invention according to the present embodiment can also be implemented as a non-transitory computer-readable medium that stores abnormality detection program 131. Various kinds of programs installed on storage 103 may be distributed in a state of being stored in a storage medium such as a memory card, for example. Alternatively, various kinds of programs installed on storage 103 may be stored in storage 103 by being downloaded from a distribution server or the like through communication interface 106.

Storage 103 further includes data storage unit 132. Data storage unit 132 stores data collected from the data collection devices by information processing device 100 and a task record input through terminal device 70 by the user.

Display controller 104 is connected to terminal device 70 and outputs a signal for displaying various kinds of information to terminal device 70 in response to an internal command from processor 101.

Input interface 105 mediates data transmission between processor 101 and terminal device 70. That is, input interface 105 receives an operation command and information that are provided to information processing device 100 by operation of terminal device 70 by the user. The information provided from terminal device 70 includes a task record input by the user who operates terminal device 70. Examples of an input device of terminal device 70 include, without limitation, a keyboard, a mouse, a touch panel, a dedicated console, and the like.

Communication interface 106 mediates data transmission between processor 101 and an external device (e.g., the data collection devices provided in production line 2 (see Fig. 2)). Communication interface 106 typically includes Ethernet (registered trademark), a universal serial bus (USB) or the like.

When the computer having the structure conforming to the general-purpose computer architecture as described above is used, an operating system (OS) for providing basic functions of the computer may be installed, in addition to an application for providing functions according to the embodiment. In this case, a program according to the embodiment may invoke necessary ones of program modules that are provided as a part of the OS in a predetermined order at a predetermined timing and perform processing. That is, the program itself according to the embodiment may not include the above-described modules, and instead cooperate with the OS to perform the processing.

Alternatively, functions provided by executing abnormality detection program 131 may be partially or entirely implemented as dedicated hardware circuitry.

### <Functional Configuration of Information Processing Device>

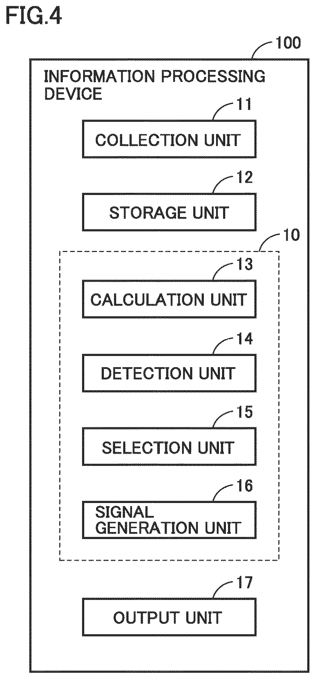

Fig. 4 shows an example of a functional configuration of the information processing device according to the embodiment. As shown in Fig. 4, information processing device 100 includes a collection unit 11, a storage unit 12, a calculation unit 13, a detection unit 14, a selection unit 15, a signal generation unit 16, and an output unit 17. Calculation unit 13, detection unit 14, selection unit 15, and signal generation unit 16 constitute processing unit 10.

Collection unit 11 is implemented by input interface 105, communication interface 106, and processor 101 that executes abnormality detection program 131. Collection unit 11 collects, from the data collection devices (see Fig. 2), actual values of the plurality of variables indicating the current status of production line 2 for each unit time (e.g., one minute, five minutes or the like), from production line 2. Furthermore, collection unit 11 acquires the task record input through terminal device 70 by the user.

Storage unit 12 is implemented by data storage unit 132 in storage 103 and processor 101 that executes abnormality detection program 131. Storage unit 12 stores the plurality of variables collected or acquired by collection unit 11, and the task record input from terminal device 70.

Processing unit 10 (calculation unit 13, detection unit 14, selection unit 15, and signal generation unit 16) is implemented by execution of abnormality detection program 131 by processor 101. Calculation unit 13 calculates a statistic for each unit time by performing multivariate analysis on the plurality of variables. The multivariate analysis is a method of statistically processing multivariate data consisting of a plurality of explanatory variables. Therefore, calculation unit 13 may use a known multivariate analysis method. For example, calculation unit 13 may calculate the statistic using a Mahalanobis-Taguchi (MT) method. By applying the MT method to the plurality of variables, calculation unit 13 can calculate a Mahalanobis distance as the statistic.

Calculation unit 13 may calculate the statistic using multivariate analysis other than the MT method. Examples of multivariate analysis other than the MT method can include a principal component analysis (PCA), partial least squares (PLS), a Taguchi method (T method) and the like.

Calculation unit 13 further calculates a degree of contribution of each of the plurality of variables to the calculated statistic. For example, when the MT method is used as multivariate analysis, calculation unit 13 acquires a dataset indicating the values of the plurality of variables. Calculation unit 13 calculates a Mahalanobis distance of the dataset for each combination of one or more variables selected from the plurality of variables, using a unit space corresponding to this combination. The unit space corresponding to each combination may be generated in advance using a sample data group obtained when production line 2 is operating normally. Calculation unit 13 creates a factor effect diagram for the plurality of variables based on the Mahalanobis distance calculated for each combination. The factor effect diagram indicates a degree of influence, i.e., a degree of contribution, of each parameter on the Mahalanobis distance.

Detection unit 14 detects the occurrence of an abnormality in production line 2 using the statistic calculated by calculation unit 13. For example, when an abnormality occurs in any one of the plurality of processes included in production line 2, for example, the statistic varies. Detection unit 14 compares the statistic with the control range of the statistic and determines whether the statistic is within the control range. When the statistic deviates from the control range, detection unit 14 detects the occurrence of the abnormality in production line 2.

In response to detection of the occurrence of the abnormality by detection unit 14, selection unit 15 selects a variable having a relatively high degree of influence on the statistic from the plurality of variables. For example, when the MT method is used as multivariate analysis, selection unit 15 may extract the top predetermined number of parameters using the technique disclosed in NPL 1 (Kishio TAMURA, "3rd State Diagnosis Using MT Method", Standardization and Quality Control, 2008, Vol. 61, No. 12). In accordance with the method disclosed in the above-described document, selection unit 15 extracts the top predetermined number of parameters each having a significant factor effect as main items from the factor effect diagram created by calculation unit 13. The factor effect diagram indicates a degree of influence of each parameter on a Mahalanobis distance. For example, when a Mahalanobis distance calculated using a unit space corresponding to a combination including a certain variable (called "parameter A") is greater than a Mahalanobis distance calculated using a unit space corresponding to a combination that does not include parameter A, a degree of influence of parameter A on the Mahalanobis distance is high. Therefore, selection unit 15 can extract parameter A as a main item.

Using the statistic calculated by calculation unit 13 and the task record stored in storage unit 12, signal generation unit 16 generates an image signal indicating an image including a state monitoring screen (state monitoring screen 201 shown in Fig. 1), the state monitoring screen being a screen on which a graph (graph 201A shown in Fig. 1) and a chart (chart 201B shown in Fig. 1) are displayed next to each other along the same time axis, the graph indicating a time series of the statistics, the chart indicating the execution period of the task category. The graph indicating the time series of the statistics may include a display indicating the control range of the statistic.

Furthermore, when detection unit 14 detects the occurrence of the abnormality in production line 2, signal generation unit 16 generates the image signal such that a result of detection by detection unit 14 is displayed on the image. For example, as shown in Fig. 1, signal generation unit 16 sets a display color of a marker indicating a statistic that deviates from the control range to be different from a display color of a marker indicating a statistic that is within the control range, when generating the image signal indicating the image including graph 201A.

When generating the image as described above, signal generation unit 16 may further acquire a degree of contribution of each of the plurality of variables to a statistic selected from the time series of the statistics, and generate the image signal such that a degree-of-contribution display screen is included in the image.

When detection unit 14 detects the occurrence of the abnormality in production line 2, signal generation unit 16 performs a process for displaying a degree of contribution of the main item in the graph on the degree-of-contribution display screen and the execution period of the task category relating to the main item in the chart on the state monitoring screen in association with each other, when generating the image signal. For example, signal generation unit 16 sets a display color of the degree of contribution of the main item and a display color of the execution period of the task category relating to the main item such that the degree of contribution of the main item and the execution period of the task category relating to the main item are displayed in the same color.

Output unit 17 is implemented by display controller 104 and processor 101 that executes abnormality detection program 131. Output unit 17 outputs the image signal generated by processing unit 10 (signal generation unit 16) to the display device (terminal device 70).

Terminal device 70 processes the image signal, thereby displaying state monitoring screen 201. When the image signal is a signal indicating an image including both state monitoring screen 201 and degree-of-contribution display screen 202, terminal device 70 displays state monitoring screen 201 and degree-of-contribution display screen 202.

By checking graph 201A on state monitoring screen 201, the user can grasp transition of the status of production line 2. When an abnormality occurs in production line 2, the user can identify the occurrence of the abnormality based on the display in graph 201A. Furthermore, by checking degree-of-contribution display screen 202 and chart 201B on state monitoring screen 201, the user can identify the task category relating to the item having a high degree of contribution (main item).

The configuration of information processing device 100 is not limited to the configuration shown in Fig. 4. For example, information processing device 100 may be configured to have a display function and an input function. According to this configuration, information processing device 100 can include an input device such as a keyboard or a mouse and a display device, in addition to the elements shown in Fig. 3 or Fig. 4. Therefore, output unit 17 outputs the image signal to the display device. The display device displays state monitoring screen 201 and degree-of-contribution display screen 202. As described above, the display device that receives the image signal from output unit 17 is not limited to a device different from information processing device 100. The display device may be a device included in information processing device 100.

### <Example of Input of Task Record>

A mechanical relay will be illustrated below as an example of a product produced in production line 2 in order to describe the present embodiment more specifically.

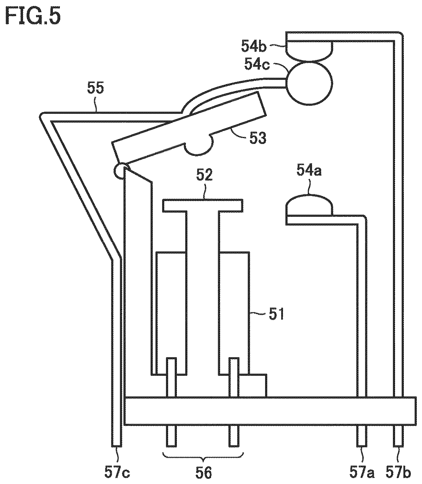

Fig. 5 shows an example of a configuration of a main portion of a mechanical relay, which is an example of a product produced in a production line. As shown in Fig. 5, a mechanical relay 5 includes an iron core 52 having a coil 51 wound thereon, an iron piece 53, a contact point 54a (A terminal), a contact point 54b (B terminal), a contact point 54c (C terminal), a hinge spring 55, a coil terminal 56, fixed piece terminals 57a and 57b, and a movable piece terminal 57c.

When a current flows through coil 51 via coil terminal 56, iron core 52 is magnetized. Therefore, iron piece 53 is adsorbed to iron core 52. When iron piece 53 is adsorbed to iron core 52, contact point 54c attached to iron piece 53 is separated from contact point 54b and comes into contact with contact point 54a. When no current flows through coil 51, iron piece 53 is separated from iron core 52 by the force of hinge spring 55. As a result, contact point 54c is separated from contact point 54a and comes into contact with contact point 54b.

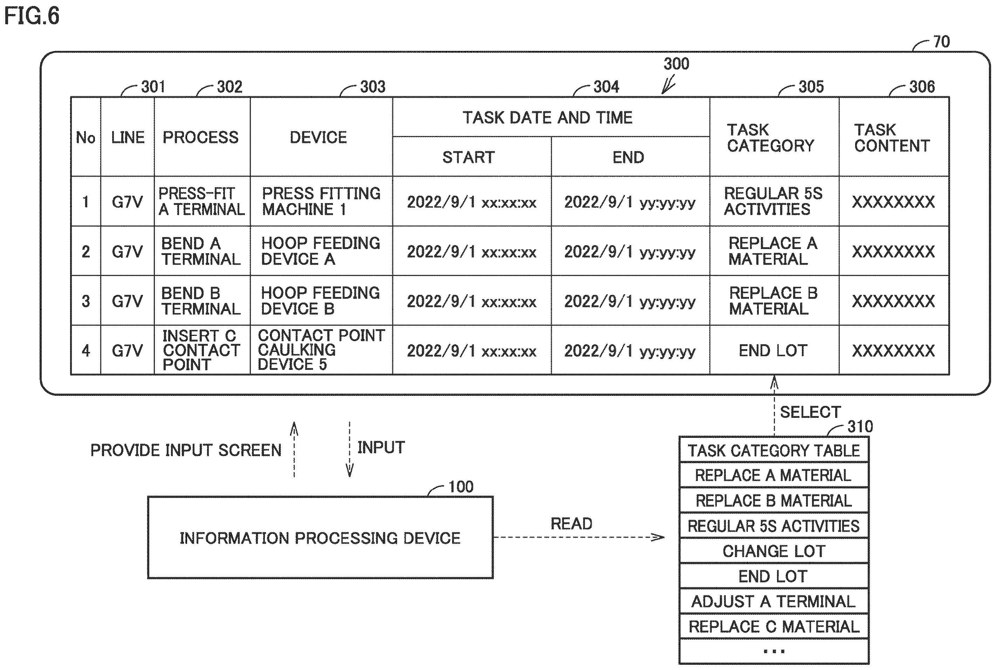

Fig. 6 shows an example of an input screen of the task record provided to the user by the terminal device. As shown in Fig. 6, information processing device 100 provides, to terminal device 70, an input screen 300 for causing the user to input the task record.

A display form of the input screen is not particularly limited. Fig. 6 shows an example of the input screen in tabular form in order to facilitate understanding of the present embodiment.

Input screen 300 includes a manufacturing line input field 301, a process name input field 302, a device name input field 303, an execution date and time input field 304, a task category input field 305, and a task content details input field 306. Each record consists of a number (No.), a manufacturing line, a process name, a device name, an execution date and time (a start date and time and an end date and time), a task category, and a task content. The number of each record may be assigned automatically.

The user inputs information about the manufacturing line, information about the process, and information about the device into manufacturing line input field 301, process name input field 302 and device name input field 303, respectively.

The user inputs the start time and the end time of the task into execution date and time input field 304.

The user selects a corresponding category from a plurality of task categories registered in a task category table 310. The selected task category is thereby input into task category input field 305. Task category table 310 is prestored in information processing device 100 and is read by information processing device 100 when the task record is input.

Task content details input field 307 is a free write-in field. The user can input specific contents of the task to task content details input field 307.

In the present embodiment, the execution date and time (the start time and the end time) of the task is input. A period from the start time to the end time is an execution period of the task. The task category and the execution period determined by input from the user are displayed on state monitoring screen 201 along the same time axis, together with the time series of the statistics.

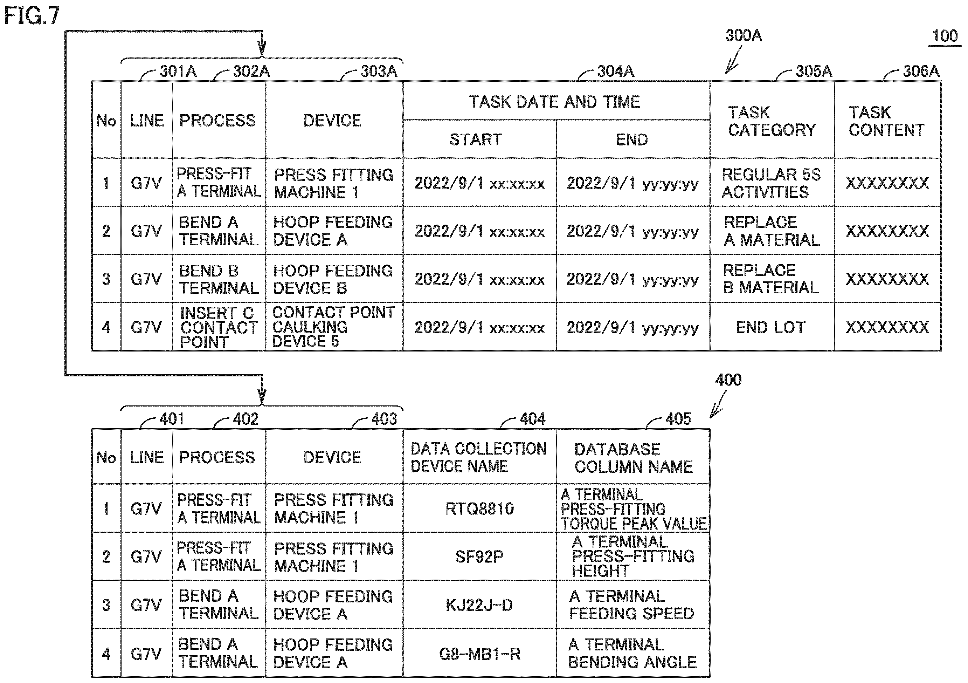

In the present embodiment, input screen 300 of the task record causes the user to input the information about the manufacturing line, the process and the device. This makes it possible to associate a highly-ranked item for the cause of the abnormality in production line 2 with qualitative information relating to this item. This will be described with reference to Fig. 7.

Fig. 7 is a schematic diagram for illustrating association between the information included in the task record and the item serving as a candidate for the cause of the abnormality by the information processing device. As shown in Fig. 7, information processing device 100 has a task record history data table 300A and a collected data item table 400. Task record history data table 300A stores the information input through input screen 300 (see Fig. 6) by the user. Therefore, task record history data table 300A includes manufacturing line information 301A, process name information 302A, device name information 303A, execution time and date information 304A, task category information 305A, and task content details information 306A.

Collected data item table 400 includes, as items, manufacturing line information 401, process name information 402, device name information 403, data collection device name information 404, and database column name information 405. Database column name information 405 is an item displayed on the degree-of-contribution display screen.

Information processing device 100 searches for collected data item table 400 by using manufacturing line information 301A, process name information 302A and device name information 303A in task record history data table 300A as keys, and extracts database column name information 405 from the corresponding record. As a result, the information included in the task record is associated with the item serving as the candidate for the cause of the abnormality.

### <Exemplary Configuration of Screen>

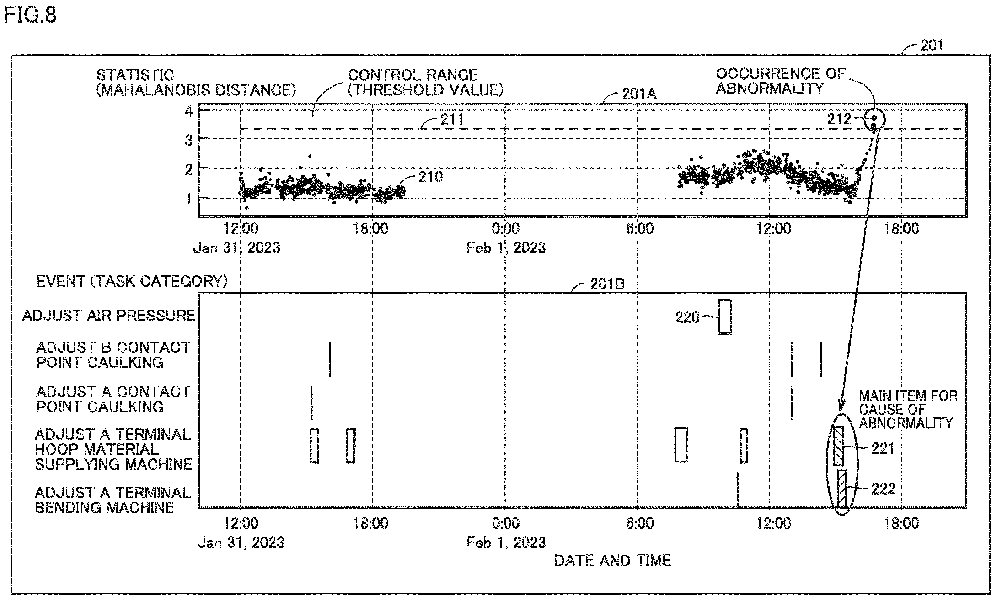

Fig. 8 is a schematic diagram showing an example of the state monitoring screen. As shown in Fig. 8, state monitoring screen 201 includes graph 201A indicating a time series of statistics (Mahalanobis distances), and chart 201B indicating a task period of an event.

A marker 210 indicating a statistic calculated by calculation unit 13 and a line 211 indicating a control range (threshold value) of the statistic are displayed on graph 201A. When the statistic is within the control range, the marker indicating this statistic is displayed in a first color (e.g., blue).

Chart 201B is a so-called Gantt chart. In order to create chart 201B, information processing device 100 extracts the information about the task date and time (the start date and time and the end date and time) and the information about the task category from task record history data table 300A. The extracted task categories (events) are arranged vertically on the vertical axis of chart 201B. The task period (the period from the start date and time to the end date and time) of each event is indicated by a bar 220.

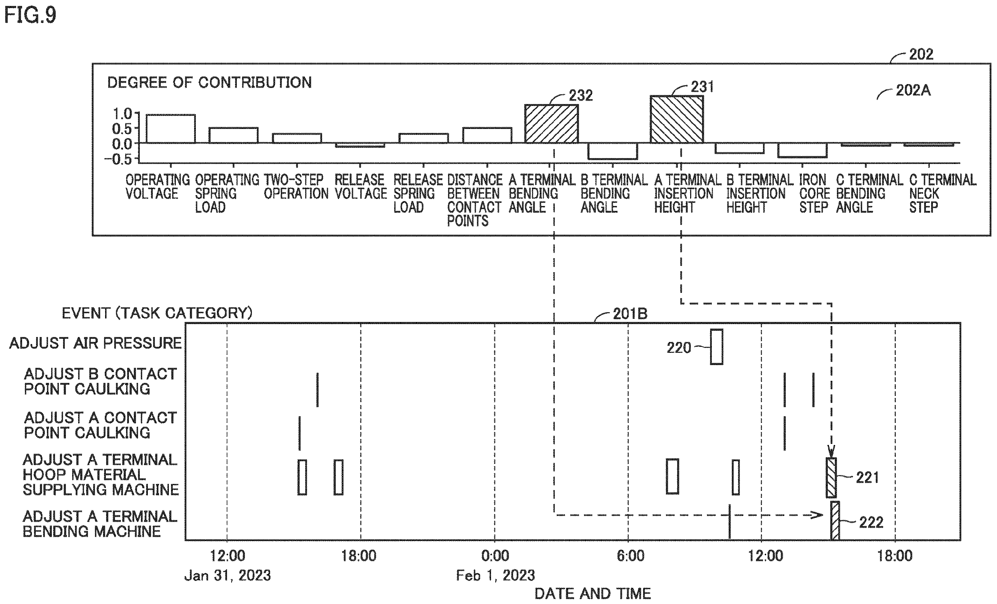

Fig. 9 is a schematic diagram showing an example of the degree-of-contribution display screen according to the embodiment. For example, when the user operates the mouse or the like to move a pointer over a marker in graph 201A, a statistic corresponding to this marker is selected. In response to reception of the information about the position of the pointer in the image from terminal device 70, information processing device 100 identifies the selected statistic and causes terminal device 70 to display degree-of-contribution display screen 202 including graph 202A indicating a plurality of degrees of contribution to the selected statistic. Degree-of-contribution display screen 202 is not limited to being provided only for a statistic deviating from the control range. Information processing device 100 may generate the image signal such that degree-of-contribution display screen 202 is displayed on terminal device 70 for any statistic selected by the user.

Referring to Figs. 8 and 9, when an abnormality occurs in production line 2, the statistic deviates from the control range. A marker 212 indicates the statistic deviating from the control range. Marker 212 is displayed in a highlighted manner. For example, marker 212 is displayed in a second color (e.g., red) different from the first color.

Fig. 9 shows an example of a degree of contribution of each of a plurality of variables to the statistic when the abnormality occurs in the production line. Degree-of-contribution display screen 202 includes graph 202A. The horizontal axis of graph 202A represents the plurality of variables, and the vertical axis of graph 202A represents the degree of contribution of each of the variables. A variable having a highest degree of contribution, of the plurality of variables, is "A terminal insertion depth". A variable having a second highest degree of contribution to the abnormality in production line 2, of the plurality of variables, is "A terminal bending angle".

"A terminal insertion depth" and "A terminal bending angle" correspond to the main items. On degree-of-contribution display screen 202, the degrees of contribution of the main items are displayed in a highlighted manner. For example, a bar 231 indicating the degree of contribution of "A terminal insertion depth" is displayed in red. A bar 232 indicating the degree of contribution of "A terminal bending angle" is displayed in yellow. Bars indicating the degrees of contribution of the other variables are displayed in, for example, blue that is different from red and yellow. When there is no abnormality in production line 2, the degrees of contribution of all of the variables may be displayed in blue.

As shown in Fig. 9, the highlighted display of the degree of contribution on degree-of-contribution display screen 202 corresponds to the highlighted display of the task period in chart 201B. Specifically, a color used for the highlighted display of the task period in chart 201B is the same as the color used to display the degree of contribution relating to the main factor on degree-of-contribution display screen 202. A bar 221 indicates an execution period of an event relating to the variable having a highest degree of contribution ("adjust A terminal hoop material supplying machine"). Bar 221 is displayed in red. A bar 222 indicates a task time of an event relating to the variable having a second highest degree of contribution ("adjust A terminal bending machine"). Bar 222 is displayed in yellow.

When only graph 201A is displayed on state monitoring screen 201, the user can detect the occurrence of the abnormality in production line 2 by referring to graph 201A. However, when the abnormality in production line 2 is caused by a plurality of factors, it may be difficult for the user to identify the cause of the abnormality based only on graph 201A.

In the present embodiment, graph 201A and chart 201B are displayed along the same time axis. This makes it easier for the user to understand the relevance between the statistic and the task category (event). For example, when an abnormality occurs in production line 2, the user can identify an event that has occurred at the date and time closest to the date and time specified by marker 212. As described above, since the statistic and the qualitative information relating to this statistic are displayed along the same time axis, the user can easily grasp whether there is relevance between the task event and the abnormality in the production line.

Furthermore, the main factor (highly-ranked item) for the cause of the abnormality and the information (qualitative information) about the task category relating to this main factor are associated with each other by color and displayed. This makes it possible for the user to grasp the relevance between the on-site task record and the abnormality in production line 2. Therefore, when the abnormality occurs in the manufacturing process, the cause of the abnormality can be easily grasped.

According to the example shown in Fig. 8, the time of the occurrence of the abnormality specified by marker 212 in graph 201A corresponds to the time after the end of the execution periods of the task categories indicted by bars 221 and 222 in chart 201B. This shows the causal relationship that execution of the tasks belonging to the task categories corresponding to bars 221 and 222 causes the abnormality in production line 2.

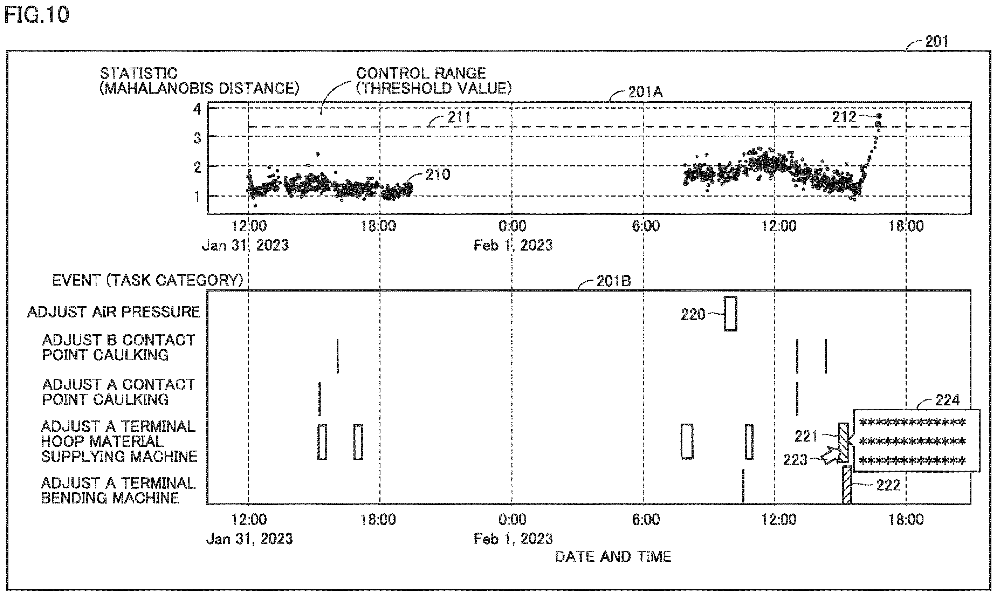

Furthermore, an image displaying information about the task content may be included in state monitoring screen 201. Fig. 10 is a schematic diagram showing an example of an additional display on the state monitoring screen provided to the terminal device by the information processing device according to the embodiment.

As shown in Fig. 10, the user operates the mouse or the like to move a pointer 223 over the position of bar 221. In response to reception of the information about the position of the pointer in the image from terminal device 70, information processing device 100 determines that bar 221 has been selected. Information processing device 100 searches for task record history data table 300A by using the event (task category) corresponding to bar 221 and the execution period indicated by bar 221 as search conditions, and extracts task content details information 306A (see Fig. 7) from the corresponding record. Information processing device 100 generates an image signal such that a comment display 224 for displaying the extracted task content details information is displayed at a position adjacent to bar 221.

As long as comment display 224 is displayed in association with bar 221, the position of comment display 224 is not particularly limited. For example, when the user selects bar 221, comment display 224 may be displayed at any position on the screen of the terminal device in the form of a pop-up window. Since the information about the task content is provided to the user, the detailed information required for the user to grasp the cause of the abnormality in the production line can be provided to the user.

### <Example of Analysis of Cause of Abnormality>

In the present embodiment, the user can analyze the cause of the abnormality in the production line based on the screens shown in Figs. 8 and 9. A hypothetical case will be described below.
(1) The user checks graph 201A on state monitoring screen 201 (see Fig. 8). In graph 201A, marker 212 is located above line 211 indicating the threshold value. Therefore, the user detects the abnormality in production line 2.
(2) The user selects marker 212 using the device such as the mouse. Degree-of-contribution display screen 202 is thereby displayed on terminal device 70 (see Fig. 9). The user grasps the item of the main factor based on the display of the degree of contribution on degree-of-contribution display screen 202. In the example shown in Fig. 9, bar 231 indicating the degree of contribution of "A terminal insertion height" is displayed in red, and bar 232 indicating the degree of contribution of "A terminal bending angle" is displayed in yellow. Therefore, the user can grasp that the item of the main factor is "A terminal insertion height" and "A terminal bending angle".

Furthermore, by looking at state monitoring screen 201 (see Fig. 8), the user grasps that bars 221 and 222 are displayed in red and yellow in chart 201B, respectively. Therefore, the user can grasp that the events relating to "A terminal insertion height" and "A terminal bending angle" are "adjust A terminal hoop material supplying machine" and "adjust A terminal bending machine", respectively.

(3) Based on the information obtained from state monitoring screen 201 and degree-of-contribution display screen 202, the user examines what kind of phenomenon has led to the higher contribution of the above-described two factors to the abnormality.

Let us assume that, as a result of examination about "adjust A terminal hoop material supplying machine", it turned out that temporary suspension (also called "short-time stoppage") occurred in the A terminal hoop material supplying machine. For example, the user finds out that there was a break in the hoop material. The user estimates that the hardness of the material changed somewhere in the middle of the hoop material, which resulted in variation of the height when inserting the A terminal into a substrate of a relay. In this way, the user can understand the cause that led to the higher contribution of the A terminal insertion height to the abnormality.

(4) Furthermore, as a result of examination about "A terminal bending angle", the user grasps that a mold of the A terminal bending machine was replaced with a new mold. As a result of examination of the new mold, the user grasps that the new mold slightly changed in shape, in comparison with the shape of the previously used mold. In this way, the user can understand the cause that led to the higher contribution of the A terminal bending angle to the abnormality.

(5) Based on the examination results, the user can take measures to eliminate the cause of the abnormality. For example, in order to deal with "A terminal insertion height", the user takes measures of replacing the hoop material with a new one. In order to deal with "A terminal bending angle", the user takes measures of adjusting the angle of the bending machine.

(6) Furthermore, a report about the cause of the abnormality and the measures is provided from the manufacturing site. For example, the following report is provided.

"The phenomena that have occurred relatively frequently until now are "short-time stoppage of A terminal hoop material supplying machine" and "mold replacement of A terminal bending machine". When these phenomena occurred at different timings, these phenomena did not greatly affect the quality of the product (relay). Therefore, no special measures have been taken against these phenomena. However, as a result of this analysis, it has turned out that the occurrence of these phenomena at the same timing has led to the abnormality in production line 2. Therefore, from now on, we will be thorough in arousing attention."

### <Flow of Process by Information Processing Device>

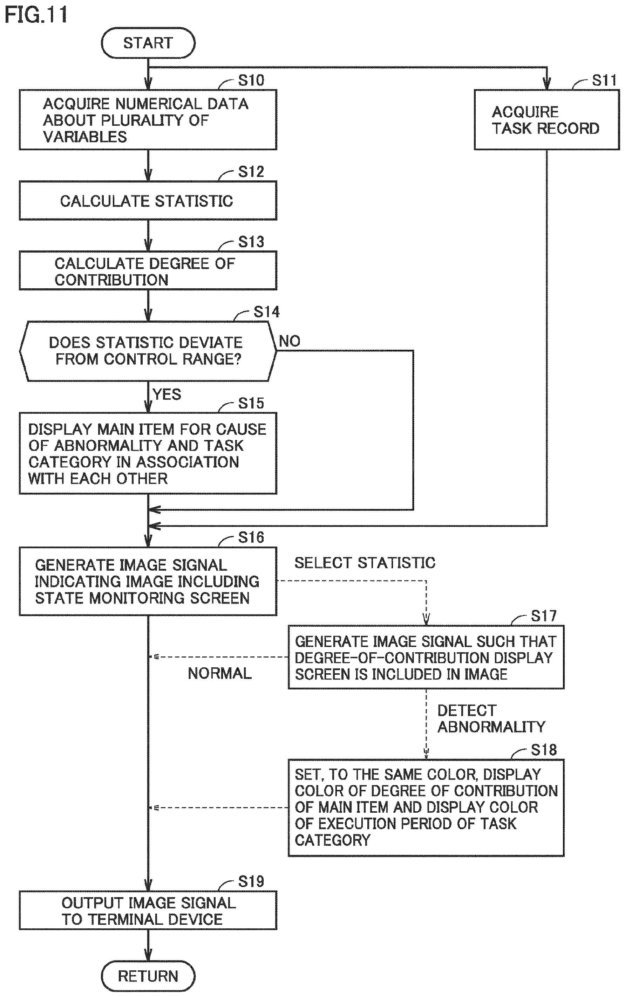

Fig. 11 is a flowchart showing an example of a flow of a process performed by the information processing device according to the embodiment. When processor 101 shown in Fig. 3 executes abnormality detection program 131, information processing device 100 is configured as shown in Fig. 4 and the process shown in Fig. 11 is performed.

Referring to Fig. 11 and Fig. 4, first, collection unit 11 acquires numerical data about a plurality of variables indicating a status of production line 2 (step S10). In the present embodiment, collection unit 11 acquires the numerical data about the plurality of variables from data collection devices 31 to 35 (see Fig. 2).

Collection unit 11 further acquires a task record from terminal device 70 (step S11). When the user inputs the task record into terminal device 70, collection unit 11 acquires the task record. Therefore, the acquisition of the task record is performed independently from the processing in step S10.

Next, processing unit 10 (calculation unit 13) calculates a statistic using the numerical data acquired in step S10 (step S12). For example, calculation unit 13 calculates the statistic (Mahalanobis distance) using the MT method. Furthermore, processing unit 10 (calculation unit 13) calculates a degree of contribution of each of the plurality of variables to the statistic calculated in step S12 (step S13).

Next, processing unit 10 (detection unit 14) determines whether the statistic calculated in step S12 deviates from a control range. When the statistic deviates from the control range, detection unit 14 detects the occurrence of an abnormality in production line 2. In this case (YES in step S14), the process proceeds to step S15. In step S15, processing unit 10 (signal generation unit 16) determines to display a main item for a cause of the abnormality and a task category in association with each other. On the other hand, when the statistic is within the control range (NO in step S14), the process proceeds from step S14 to step S16. "The statistic is within the control range" means that production line 2 is normal.

In step S16, processing unit 10 (signal generation unit 16) generates an image signal indicating image 200 including state monitoring screen 201, using the statistic calculated by the processing in step S12 and the task record acquired by the processing in step S11. When information indicating that the user has selected a statistic from a time series of statistics is not input to information processing device 100, the process proceeds from step S16 to step S19.

When the information indicating that the user has selected the statistic from the time series of statistics is input from terminal device 70 to information processing device 100, the process proceeds to step S17. In step S17, signal generation unit 16 generates the image signal such that degree-of-contribution display screen 202 indicating a degree of contribution of each of the plurality of variables to the selected statistic and state monitoring screen 201 are included in image 200 displayed on terminal device 70.

When production line 2 is determined as being normal in step S14, the process proceeds from step S17 to step S19. On the other hand, when the abnormality in production line 2 is detected (i.e., when the determination to display the main item for the cause of the abnormality and the task category in association with each other is made by the processing in step S15), the process proceeds from step S17 to step S18.

In step S18, regarding the display of the degree of contribution and the display of an execution period of the task category that are set by the image signal, signal generation unit 16 sets, to the same color, a display color of a degree of contribution of the main item in graph 202A and a display color of the execution period of the task category corresponding to the main item. Next, the process proceeds from step S18 to step S19.

In step S19, output unit 17 outputs the image signal generated in any one of steps S16, S17 and S18 to the display device (terminal device 70).

### § 3. Additional Notes

As discussed above, the present embodiment includes the following disclosure.

### (Configuration 1)

An information processing device (100) that processes information relating to a status of a production line including a plurality of processes (21 to 25), the information processing device (100) comprising:
a storage unit (12, 132) configured to store a plurality of variables indicating statuses of the plurality of processes (21 to 25) and store a task record, the task record including a task category to which a task relating to at least one of the plurality of processes (21 to 25) belongs, and an execution period that is a time period during which the task is executed;
a processing unit (10); and
an output unit (17), wherein
the processing unit (10) is configured to:
   calculate a statistic for each unit time by performing multivariate analysis on the plurality of variables; and
   generate an image signal indicating an image (200) including a state monitoring screen (201), the state monitoring screen (201) being a screen on which a first graph (201A) and a chart (201B) are displayed next to each other along the same time axis, the first graph (201A) indicating a time series of the statistics with a first axis representing time and a second axis representing the statistics, the chart (201B) indicating the execution period of the task category, and
the output unit (17) is configured to output the image signal to a display device (70).

### (Configuration 2)

The information processing device (100) according to Configuration 1, wherein
the processing unit (10) is further configured to calculate a degree of contribution of each of the plurality of variables to a statistic selected from the time series of the statistics, and generate the image signal including a degree-of-contribution display screen (202) in the image (200), the degree-of-contribution display screen (202) being a screen on which a second graph (202A) indicating the degree of contribution for each of the plurality of variables is displayed.

### (Configuration 3)

The information processing device (100) according to Configuration 2, wherein
the processing unit (10) is configured to:
select a main item from the plurality of variables based on the degree of contribution; and
generate the image signal such that a degree of contribution of the main item in the second graph (202A) and the execution period of the task category relating to the main item in the chart (201B) on the state monitoring screen (201) are displayed on the image (200) in association with each other.

### (Configuration 4)

The information processing device (100) according to Configuration 3, wherein
the processing unit (10) is configured to set, to the same color, a display color of the degree of contribution of the main item in the second graph (202A) and a display color of the execution period of the task category relating to the main item in the chart (201B) on the state monitoring screen (201).

### (Configuration 5)

The information processing device (100) according to any one of Configurations 1 to 4, wherein
the task record further includes information about a task content of the task, and
the processing unit (10) is configured to generate the image signal such that the task content associated with the task category and the execution period selected from the task record is displayed on the image (200) in association with the chart (201B) on the state monitoring screen (201).

### (Configuration 6)

An information processing method of processing information relating to a status of a production line including a plurality of processes (21 to 25), the information processing method comprising:
calculating a statistic for each unit time by performing multivariate analysis on a plurality of variables indicating statuses of the plurality of processes (21 to 25) (S12);
generating an image signal indicating an image (200) including a state monitoring screen (201), the state monitoring screen (201) being a screen on which a graph (201A) and a chart (201B) are displayed next to each other along the same time axis, the graph (201A) indicating a time series of the statistics with a first axis representing time and a second axis representing the statistics, the chart (201B) indicating an execution period of a task category to which a task relating to at least one of the plurality of processes (21 to 25) belongs (S16); and
outputting the image signal to a display device (70) (S19).

### (Configuration 7)

A program (131) that causes a computer to perform an information processing method of processing information relating to a status of a production line including a plurality of processes (21 to 25),
the information processing method including:
calculating a statistic for each unit time by performing multivariate analysis on a plurality of variables indicating statuses of the plurality of processes (21 to 25) (S12);
generating an image signal indicating an image (200) including a state monitoring screen (201), the state monitoring screen (201) being a screen on which a graph (201A) and a chart (201B) are displayed next to each other along the same time axis, the graph (201A) indicating a time series of the statistics with a first axis representing time and a second axis representing the statistics, the chart (201B) indicating an execution period of a task category to which a task relating to at least one of the plurality of processes (21 to 25) belongs (S16); and
outputting the image signal to a display device (70) (S19).

### (Configuration 8)

A production system (1) comprising:
a production line (2) including a plurality of processes; and
an information processing device (100) that processes information relating to statuses of the plurality of processes, wherein
the information processing device (100) is configured to:
   acquire a plurality of variables indicating the statuses of the plurality of processes, and a task record, the task record including a task category to which a task relating to at least one of the plurality of processes belongs, and an execution period that is a time period during which the task is executed;
   calculate a statistic for each unit time by performing multivariate analysis on the plurality of variables; and
   generate an image signal indicating an image including a state monitoring screen (201), the state monitoring screen (201) being a screen on which a graph (201A) and a chart (201B) are displayed next to each other along the same time axis, the graph (201A) indicating a time series of the statistics with a first axis representing time and a second axis representing the statistics, the chart (201B) indicating the execution period of the task category,
the production system (1) further comprising
a display device (70) configured to display the state monitoring screen (201) upon receipt of the image signal.

Although the embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

### REFERENCE SIGNS LIST

1 production system; 2 production line; 5 mechanical relay; 10 processing unit; 11 collection unit; 12 storage unit; 13 calculation unit; 14 detection unit; 15 selection unit; 16 signal generation unit; 17 output unit; 21 to 25 process; 31 to 35 data collection device; 51 coil; 52 iron core; 53 iron piece; 54a to 54c contact point; 55 hinge spring; 56 coil terminal; 57a, 57b fixed piece terminal; 57c movable piece terminal; 70 terminal device; 100 information processing device; 101 processor; 102 memory; 103 storage; 104 display controller; 105 input interface; 106 communication interface; 131 abnormality detection program; 132 data storage unit; 200 image; 201 state monitoring screen; 201A, 202A graph; 201B chart; 202 degree-of-contribution display screen; 210, 212 marker; 211 line; 220, 221, 222, 231, 232 bar; 223 pointer; 224 comment display; 300 input screen; 300A task record history data table; 301 manufacturing line input field; 301A, 401 manufacturing line information; 302 process name input field; 302A, 402 process name information; 303 device name input field; 303A, 403 device name information; 304 execution date and time input field; 304A execution date and time information; 305 task category input field; 305A task category information; 306, 307 task content details input field; 306A task content details information; 310 task category table; 400 collected data item table; 404 data collection device name information; 405 database column name information; S10 to S19 step.

## Claims

1. An information processing device that processes information relating to a status of a production line including a plurality of processes, the information processing device comprising:
a storage unit configured to store a plurality of variables indicating statuses of the plurality of processes and store a task record, the task record including a task category to which a task relating to at least one of the plurality of processes belongs, and an execution period that is a time period during which the task is executed;
a processing unit; and
an output unit, wherein
the processing unit is configured to:
calculate a statistic for each unit time by performing multivariate analysis on the plurality of variables; and
generate an image signal indicating an image including a state monitoring screen, the state monitoring screen being a screen on which a first graph and a chart are displayed next to each other along the same time axis, the first graph indicating a time series of the statistics with a first axis representing time and a second axis representing the statistics, the chart indicating the execution period of the task category, and
the output unit is configured to output the image signal to a display device.

2. The information processing device according to claim 1, wherein
the processing unit is further configured to calculate a degree of contribution of each of the plurality of variables to a statistic selected from the time series of the statistics, and generate the image signal including a degree-of-contribution display screen in the image, the degree-of-contribution display screen being a screen on which a second graph indicating the degree of contribution for each of the plurality of variables is displayed.

3. The information processing device according to claim 2, wherein the processing unit is configured to:
select a main item from the plurality of variables based on the degree of contribution; and
generate the image signal such that a degree of contribution of the main item in the second graph and the execution period of the task category relating to the main item in the chart on the state monitoring screen are displayed on the image in association with each other.

4. The information processing device according to claim 3, wherein
the processing unit is configured to set, to the same color, a display color of the degree of contribution of the main item in the second graph and a display color of the execution period of the task category relating to the main item in the chart on the state monitoring screen.

5. The information processing device according to any one of claims 1 to 4, wherein
the task record further includes information about a task content of the task, and
the processing unit is configured to generate the image signal such that the task content associated with the task category and the execution period selected from the task record is displayed on the image in association with the chart on the state monitoring screen.

6. An information processing method of processing information relating to a status of a production line including a plurality of processes, the information processing method comprising:
calculating a statistic for each unit time by performing multivariate analysis on a plurality of variables indicating statuses of the plurality of processes;
generating an image signal indicating an image including a state monitoring screen, the state monitoring screen being a screen on which a graph and a chart are displayed next to each other along the same time axis, the graph indicating a time series of the statistics with a first axis representing time and a second axis representing the statistics, the chart indicating an execution period of a task category to which a task relating to at least one of the plurality of processes belongs; and
outputting the image signal to a display device.

7. A program that causes a computer to perform an information processing method of processing information relating to a status of a production line including a plurality of processes,
the information processing method including:
calculating a statistic for each unit time by performing multivariate analysis on a plurality of variables indicating statuses of the plurality of processes;
generating an image signal indicating an image including a state monitoring screen, the state monitoring screen being a screen on which a graph and a chart are displayed next to each other along the same time axis, the graph indicating a time series of the statistics with a first axis representing time and a second axis representing the statistics, the chart indicating an execution period of a task category to which a task relating to at least one of the plurality of processes belongs; and
outputting the image signal to a display device.

8. A production system comprising:
a production line including a plurality of processes; and
an information processing device that processes information relating to statuses of the plurality of processes, wherein
the information processing device is configured to:
acquire a plurality of variables indicating the statuses of the plurality of processes, and a task record, the task record including a task category to which a task relating to at least one of the plurality of processes belongs, and an execution period that is a time period during which the task is executed;
calculate a statistic for each unit time by performing multivariate analysis on the plurality of variables; and
generate an image signal indicating an image including a state monitoring screen, the state monitoring screen being a screen on which a graph and a chart are displayed next to each other along the same time axis, the graph indicating a time series of the statistics with a first axis representing time and a second axis representing the statistics, the chart indicating the execution period of the task category,
the production system further comprising
a display device configured to display the state monitoring screen upon receipt of the image signal.
